# EUROPÄISCHE PATENTSCHRIFT

(11) **EP 0 663 512 B1**
(45) Veröffentlichungstag und Bekanntmachung des Hinweises auf die Patenterteilung: **07.04.1999**
(21) Anmeldenummer: 94116770.2
(22) Anmeldetag: 25.10.1994
(51) Int. Cl.: E21D 20/02, F16B 13/14

(54) **Verankerungspatrone**
Anchoring cartridge
Cartouche pour scellement d'ancrage

(30) Priorität: 22.11.1993 DE 4339708
(43) Veröffentlichungstag der Anmeldung: 19.07.1995
(73) Patentinhaber: UPAT GMBH & CO, D-79312 Emmendingen (DE)
(72) Erfinder: Weber, Christian, D-79312 Emmendingen (DE); Grün, Jürgen, D-79268 Bötzingen (DE)

(56) Entgegenhaltungen:
- EP-A- 0 029 677
- EP-A- 0 150 555
- EP-A- 0 431 302
- WO-A-89/08202
- DE-B- 1 536 024
- US-A- 5 256 723

## Beschreibung

Die Erfindung betrifft eine Verankerungspatrone für eine aushärtende Mehrkomponenten-Masse bestehend aus einem Harz und einem Härter gemäß der Gattung des Anspruchs 1.

Eine derartige koaxial fixierte Verankerungspatrone ist aus der DE OS 38 06 598 bekannt. Zur Fixierung der Innenpatrone in der Außenpatrone wird ein mit Benzoylperoxidhärter beschichteter Quarzsand verwendet. Die Korngröße des Füllstoffes im Ringraum zwischen den beiden Patronen ist zweckmäßig unterschiedlich. Im vorderen Bereich des Ringraums befindet sich Füllstoff mit einer feineren Körnung und im hinteren Bereich mit einer größeren Körnung.

Durch die unterschiedliche Korngröße ist das Einschlagen einer Ankerstange in ein Bohrloch von Hand erschwert. Um den Setzvorgang durchzuführen, insbesondere im Bohrloch mit einem kleineren Durchmesser, ist es notwendig, mehrere kräftige Schläge anzuwenden.

Durch die feinere Körnung weist der Füllstoff im vorderen Bereich eine höhere Konzentration von Benzoylperoxid, bedingt durch die größere Beschichtungsfläche, als in dem hinteren Bereich auf. Dadurch wird das Aushärten der Masse ungleichmäßig verlaufen bzw. während im vorderen Bereich der Aushärtungsprozess abgeschlossen wird, wird im hinteren Bereich die Masse noch nicht ausgehärtet. Das langsame Aushärten des Überschusses am Bohrlochmund erweist sich besonders nachteilig bei der Anwendung styrolhaltiger Harze, weil der Styrolgeruch längere Zeit vorhanden bleibt.

Desweiteren ist die Vorbereitung des mit Benzoylperoxidhärter beschichteten Füllstoffes kompliziert und kostenaufwendig.

Der Erfindung liegt die Aufgabe zugrunde, eine Verankerungspatrone derart zu verbessern, daß ein gleichmäßiges Verteilen des Härters gesichert, ein einfaches und leichtes Setzen der Ankerstange ermöglicht und eine kostengünstige Herstellung erreicht wird.

Die Lösung dieser Aufgabe wird durch die in Anspruch 1 angegebenen Merkmale erreicht.

Durch die Fixierung der Innenpatrone in der Außenpatrone mittels eines Gemisches aus einem Peroxidhärter und Polymerfüllstoff wird eine gleichmäßige Härterverteilung im Ringraum zwischen der Innen- und Außenpatrone erreicht. Die Vorbereitung des Fixierungsgemisches erfolgt durch ein einfaches Vermischen des Peroxidhärters mit Polymerfüllstoff, wobei die Korngröße der beiden Bestandteile kleiner als 0,5 mm und die Sieblinie vergleichbar ist.

Beim Setzvorgang wird die Verankerungspatrone im Bohrloch durch ein leichtes Einschlagen mit dem Hammer zerstört und die einzelne Komponente miteinander vermischt. Um über den gesamten Verankerungsbereich ein möglichst gleichmäßiges Mischverhältnis zwischen Harz und Härter zu erreichen, ist es notwendig, das Fixierungsgemisch so einzustellen, daß das Dichteverhältnis der Bestandteile Härter/Polymerfüllstoff zwischen 0,8 - 1,5 liegt. Dadurch wird gewährleistet, daß ein gleichzeitiges, vollständiges Aushärten der Masse im Verankerungsbereich und Bildung eines Verbunds erreicht wird.

Bei einem zweckmäßigen Ausführungsbeispiel erfolgt die Fixierung des hinteren Endes der Innenpatrone in der Außenpatrone durch eine thermische Behandlung. Durch die Fixierung unmittelbar unter der Kappe der Innenpatrone wird eine Möglichkeit für die optische Kontrolle des Fließverhaltens des Harzes und die Einsetzbarkeit der Patrone geschaffen. Desweiteren bleibt die Lage der Innenpatrone während des Transports unverändert.

Als Peroxidhärter wird Dibenzoylperoxid, eventuell in einem festen Weichmacher, z.B. Dicyklohexylphthalat phlegmatisiert und als Polymerfüllstoffe ein Polymethylmethacrylat-, Polyethylen-, Polypropylen-, Polycarbonat- und Polyvinylchloridpulver verwendet.

Als Harzkomponente sind radikalisch härtbare Harze verwendet, z.B. ein ungesättigtes Polyesterharz, Vinylesterharz, Vinylurethanharz, Acrylharze, gelöst in Styrol, mit oder ohne Acrylmonomere, wobei das Monomer mindestens eine Methacrylgruppe und die Viskosität von 1 - 2200 mPa·s bei Temp. 20 °C aufweist oder eine Mischung derselben.

Mit der erfindungsgemäßen Verankerungspatrone sind Befestigungen in horizontal und vertikal von unten nach oben in einer Decke verlaufender Bohrlöcher möglich.

Dadurch, daß die Ankerstange leicht durch Einschlagen mit dem Hammer oder dergleichen gesetzt wird, kann die Bohrung im Bauwerk, z.B. in der Wand aus Beton von verringertem Durchmesser sein.

Nachstehend wird ein Ausführungsbeispiel für die Befestigung einer Ankerstange M12 x 160, 8.8, mit erfindungsgemäßer Verankerungspatrone dargestellt:

| | |
|---|---|
| Länge der Außenpatrone | 95 mm |
| Durchmesser der Außenpatrone | 12,65 mm |
| Länge der Innenpatrone | 87 mm |
| Durchmesser der Innenpatrone | 10,75 mm |

Die Außenpatrone enthält
- Härtermischung mit 20 Gew.% 0,82 g
   Benzoylperoxid, 20 Gew.%
   Dicyklohexylphthalat und
   60 Gew.%
   Polymethylmethacrylat
   Molekulargewicht 60000
   Korngröße < 0,2 mm

Die Innenpatrone enthält
Epoxyacrylatharz mit 38 Gew.% 5,3 g
Styrol Viskosität 23°C = 685 mPa·s

Setzvorgang
- Durchmesser des Bohrlochs 14 mm
- Bohrlochlänge 110 mm
- eingeschlagen mit Handhammer 800 g 3 - 4 Schläge
Auszugswert 60 kN
Durchmesser des Bohrlochs für 15 mm
das Setzen der gleichen Ankerstange
mit Verankerungspatrone nach dem
Stand der Technik Die Erfindung wird nachfolgend anhand der Zeichnung näher erläutert.

Es zeigen
- Fig. 1: die erfindungsgemäße Verankerungspatrone im Längsschnitt
- Fig. 2: die Verankerungspatrone gemäß Fig. 1 im Querschnitt

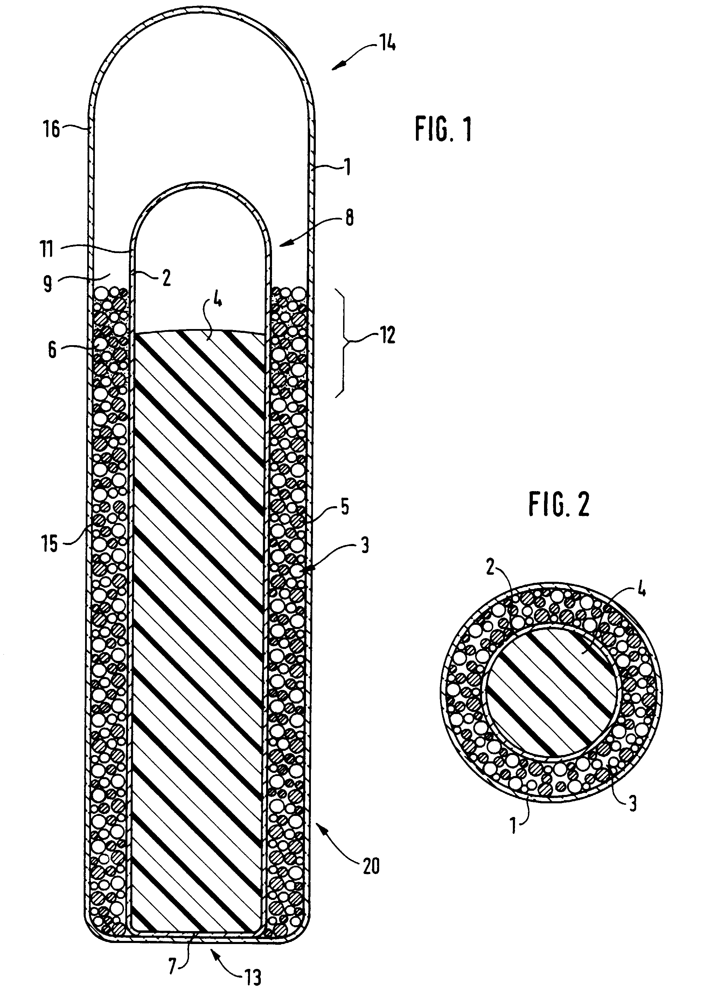

Die in Fig. 1 dargestellte Verankerungspatrone besteht aus einer mit dem Harz 4 als erste Komponente gefüllte, rohrförmige Innenpatrone 2, die von einer koaxial fixierten, ebenfalls rohrförmigen, mit der zweiten Komponente 3 gefüllten Außenpatrone 1 umgeben ist. In dem Ringraum 9 zwischen der Außenpatrone 1 und der Innenpatrone 2 befindet sich ein Fixierungsgemisch 15, das aus einem Peroxidhärter 6 und Polymerfüllstoff 5 besteht. Das vordere flache Ende 7 der Innenpatrone 2 liegt auf dem ebenfalls flachen Ende 13 der Außenpatrone 1. Sowohl das rückwärtige Ende 8 der Innenpatrone 2 als auch das rückwärtige Ende 14 der Außenpatrone 1 sind kalottenförmig oder halbkugelförmig ausgebildet. Unmittelbar unter der Kappe 11 der Innenpatrone 2 erstreckt sich die thermisch behandelte Fixierungszone 12 des Gemischs 15.

Aus dem in Fig. 2 dargestellten Querschnitt der Verankerungspatrone ist deutlich zu ersehen, daß die Innenpatrone 2 in der Außenpatrone 1 konzentrisch fixiert ist.

Die in Fig. 1 dargestellte Verankerungspatrone dient zum Befestigen eines in der Zeichnung nicht dargestellten Ankers in einem in der Zeichnung ebenfalls nicht dargestellten Bohrlochs, in das die Verankerungspatrone 20 beim Setzvorgang mit ihrem vorderen Ende 13 eingeführt wird, um danach beim Einschlagen des Ankers ein Aktivieren der in der Verankerungspatrone enthaltenden Komponenten zu bewirken. Das in der Zeichnung nicht dargestellte Bohrloch zum Befestigen des nicht dargestellten Ankers kann bezüglich der Schwerkraft beliebig verlaufen, insbesondere ist die Verankerungspatrone auch für die horizontal verlaufenden Bohrlöcher sowie vertikal von unten nach oben in einer Decke verlaufenden Bohrlöcher geeignet, wobei durch die besondere Einstellung des Fixierungsgemisches ein Auslaufen der Komponenten auch bei einer Überkopfmontage wirksam verhindert wird. Die Außenpatrone 1 sowie die Innenpatrone 2 bestehen aus Glas, das beim Einschlagen des Ankers zerbricht. Das Einschlagen des Ankers erfolgt beispielsweise von Hand mit Hilfe eines Handhammers, ohne daß es einer Schlagbohrmaschine bedarf, um eine gute Durchmischung der Komponenten zu erreichen.

## Patentansprüche

1. Verankerungspatrone für eine aushärtende Mehrkomponentenmasse, bestehend aus einem Harz und einem Härter mit einer die erste Komponente (4) enthaltenen rohrförmigen Innenpatrone (2), die von einer koaxialen fixierten, einen Füllstoff und die zweite Komponente (3) enthaltenden rohrförmigen Außenpatrone (1) umgeben ist, **dadurch gekennzeichnet,** daß die Fixierung der Innenpatrone (2) in der Außenpatrone (1) mittels eines Gemischs (15) aus einem Peroxidhärter (6) und einem Polymerfüllstoff (5) erreicht wird, und daß das Gemisch so eingestellt ist, daß das Dichteverhältnis von Peroxidhärter : Polymerfüllstoff zwischen 0,8 - 1,5 liegt.

2. Verankerungspatrone nach Anspruch 1, **dadurch gekennzeichnet,** daß das Fixierungsgemisch (15) aus 10 - 80 Gew.% Peroxidhärter (6) in Form von Granulat mit einer Korngröße < 0,5 mm (A) und Polymerfüllstoffen (5) als Kunststoffpulver mit einer Korngröße < 0,5 mm (B) besteht.

3. Verankerungspatrone nach Anspruch 1, **dadurch gekennzeichnet,** daß als Peroxidhärter ein Dibenzoylperoxid verwendet wird.

4. Verankerungspatrone nach Anspruch 1, **dadurch gekenn zeichnet,** daß als Polymerfüllstoffe ein Polymethylmethacrylat-, Polyethylen-, Polypropylen-, Polycarbonat- und/oder Polyvinylchloridpulver verwendet wird.

5. Verankerungspatrone nach Anspruch 1, **dadurch gekennzeichnet,** daß der Perxidhärter in einem festen Weichmacher phlegmatisiert wird.

6. Verankerungspatrone nach Anspruch 1, **dadurch gekennzeichnet,** daß als Phlegmatisierungsmittel Dicyklohexylphthalat verwendet wird.

7. Verankerungspatrone nach Anspruch 1, **dadurch gekennzeichnet,** daß das Fixierungsgemisch im Bereich des hinteren Endes (8) der Innenpatrone (2) thermisch behandelt wird.

## Claims

1. Anchoring cartridge for a hardening multi-component compound, consisting of a resin and a hardener, having a tubular inner cartridge (2) containing the first component (4), which inner cartridge is surrounded by a coaxially fixed tubular outer cartridge (1) containing a filler and the second component (3), **characterized in that** fixing of the inner cartridge (2) in the outer cartridge (1) is achieved by means of a mixture (15) of a peroxide hardener (6) and a polymer filler (5), and the mixture is so formulated that the density ratio of peroxide hardener to polymer filler lies between 0.8 - 1.5.

2. Anchoring cartridge according to claim 1, **characterized in that** the fixing mixture (15) consists of 10-80% by weight of peroxide hardener (6) in the form of granulate having a grain size < 0.5 mm (A) and polymer fillers (5) as plastics material powders having a grain size < 0.5 mm (B).

3. Anchoring cartridge according to claim 1, **characterized in that** a dibenzoyl peroxide is used as peroxide hardener.

4. Anchoring cartridge according to claim 1, **characterized in that** a polymethyl methacrylate, polyethylene, polypropylene, polycarbonate and/or polyvinyl chloride powder is used as polymer fillers.

5. Anchoring cartridge according to claim 1, **characterized in that** the peroxide hardener is stabilized in a solid plasticizer.

6. Anchoring cartridge according to claim 1, **characterized in that** dicyclohexyl phthalate is used as stabilizing agent.

7. Anchoring cartridge according to claim 1, **characterized in that** the fixing mixture is thermally treated in the region of the rear end (8) of the inner cartridge (2).

## Revendications

1. Cartouche d'ancrage pour une masse à plusieurs composants, durcissable, constituée d'une résine et d'un durcisseur, comportant une cartouche intérieure tubulaire (2) qui contient le premier composant (4) et qui est entourée par une cartouche extérieure tubulaire (1) fixée coaxialement et contenant une charge et le second composant (3), caractérisée par le fait que la fixation de la cartouche intérieure (2) dans la cartouche extérieure (1) s'obtient au moyen d'un mélange (15) d'un durcisseur à base de peroxyde (6) et d'une charge polymère (5) et que le mélange est prescrit de façon que le rapport de densité entre le durcisseur à base de peroxyde et la charge polymère vaille entre 0,8 et 1,5.

2. Cartouche d'ancrage selon la revendication 1, caractérisée par le fait que le mélange de fixation (15) est constitué de 10 - 80 % en poids de durcisseur à base de peroxyde (6) sous forme d'un granulat de granulométrie < 0,5 mm (A) et de charges polymères (5) sous forme de poudre plastique de granulométrie < 0,5 mm (B).

3. Cartouche d'ancrage selon la revendication 1, caractérisée par le fait que comme durcisseur à base de peroxyde on emploie un peroxyde de dibenzoyle.

4. Cartouche d'ancrage selon la revendication 1, caractérisée par le fait que comme charges polymères on emploie une poudre de polyméthylméthacrylate, de polyéthylène, de polypropylène, de polycarbonate et de chlorure de polyvinyle.

5. Cartouche d'ancrage selon la revendication 1, caractérisée par le fait que le durcisseur à base de peroxyde est désensibilisé dans un plastifiant solide.

6. Cartouche d'ancrage selon la revendication 1, caractérisée par le fait que comme agent de désensibilisation on emploie un phtalate de dicyclohexyle.

7. Cartouche d'ancrage selon la revendication 1, caractérisée par le fait que le mélange de fixation est traité thermiquement dans la zone de l'extrémité arrière (8) de la cartouche intérieure (2).
